# EUROPÄISCHE PATENTSCHRIFT

(11) **EP 0 639 708 B1**
(45) Veröffentlichungstag und Bekanntmachung des Hinweises auf die Patenterteilung: **25.03.1998**
(21) Anmeldenummer: 94110245.1
(22) Anmeldetag: 01.07.1994
(51) Int. Cl.: F02D 43/00, F01N 3/18

(54) **Verfahren zum Betrieb einer Fahrzeug-Brennkraftmaschine**
Method for operating a vehicular internal combustion engine
Procédé pour actionner un moteur à combustion interne véhiculaire

(30) Priorität: 19.08.1993 DE 4327882
(43) Veröffentlichungstag der Anmeldung: 22.02.1995
(60) Teilanmeldung: 97114046.2
(73) Patentinhaber: Czub, Ekkardt, 74193 Schwaigern (DE)
(72) Erfinder: Czub, Ekkardt, 74193 Schwaigern (DE)
(74) Vertreter: Staudt, Hans-Peter, Dipl.-Ing.

(56) Entgegenhaltungen:
- CA-A- 1 136 016
- DE-A- 4 029 811
- DE-A- 4 037 183
- US-A- 3 927 523
- MTZ MOTORTECHNISCHE ZEITSCHRIFT, Jahrgang 53, Nr. 7/8, Juli/August 1992 K.HOCKEL et al." Abgas- Emissionsreduzierung - eine Herausforderung fUr die Automobilindustrie" Seiten 326-328,333-338

## Beschreibung

Die Erfindung betrifft ein Verfahren zum Betrieb einer fremdgezündeten, wassergekühlten Fahrzeug-Brennkraftmaschine entsprechend dem Oberbegriff des Anspruchs 1.

Aufgrund der immer schärfer werdenden Abgasgrenzwerte ist es erforderlich, den Katalysator möglichst schnell auf seine Anspringtemperatur zu bringen.

Es ist bekannt (Bosch, Technische Berichte 7, 1981, 3, S. 139-151), daß durch Verstellen des Zündzeitpunktes in Richtung "spät" die Abgastemperatur erhöht werden kann. Läuft die Brennkraftmaschine jedoch nach dem Start zunächst im Leerlauf oder mit geringer Last, so reicht der mit einer derarten Zündzeitpunkt-Verstellung erzielte Temperaturgradient im Katalysator nicht aus, um diesen in der vorgeschriebenen kurzen Zeit auf die Anspringtemperatur zu bringen.

Es ist auch bekannt, durch Einbringen von Sekundärluft in das Abgassystem ein konventionell durch die Brennkraftmaschine befördertes, fettes Kraftstoff-Luftgemisch nachzuverbrennen, wobei meist ein später Zündzeitpunkt unterstützend vorgesehen wird. Die so erreichbaren Temperaturgradienten können ein schnelles Anspringen des Katalysators innerhalb der ersten Minute nach dem Start selbst im Leerlauf sicherstellen. Nachteilig bei diesem System ist der große Bauaufwand, verbunden mit einem relativ hohen Ausfallrisiko, da bei einigen Bauteilen sowohl eine thermische als auch eine chemische und verschmutzungsrelevante Belastung vorliegt. Weiterhin ist bei ausschließlichem Kurzstreckenverkehr durch das sehr fette Gemisch die Gefahr einer Verrußung der Kerzen gegeben.

Aus dem Artikel MTZ Motortechnische Zeitschrift 53 (1992), Seiten 326 bis 338 sind Katalysatoraufheizstrategien bekannt (Seite 336). Dazu wird vorgeschlagen, Motoren im Warmlauf mit fetterem Gemisch zu betreiben und durch Zugabe von Sekundärluft die im Abgas vorhandenen brennbaren Komponenten zu oxydieren. Zugleich wird der Zündzeitwinkel nach spät verschoben, um die Abgastemperatur zu erhöhen und somit die Katalysatoraufheizung zu unterstützen.

Aus der CA-PS 1 136 016 ist ein System zum schnellen Anwärmen des Katalysators bekannt, bei dem folgende Mittel vorgesehen sind:
erste Mittel, welche erkennen, ob die Katalysator-Temperatur unter der Anspringtemperatur liegt,
zweite Mitteil, welche feststellen, ob die Brennkraftmaschine im Leerlauf ist,
dritte Mittel zur Verzögerung des Zündzeitpunktes,
vierte Mittel zur Erhöhung der Leerlaufdrehzahl,
fünfte Mittel, welche die dritten und vierten Mittel aktivieren, wenn die Katalysatortemperatur unter dem Anspringwert ist und wenn die Brennkraftmaschine im Leerlauf läuft, und welche die dritten und vierten Mittel deaktivieren, wenn der Katalysator die Anspringtemperatur erreicht hat und/oder die Drehzahl über der Leerlaufdrehzahl liegt.

Die ersten Mittel können dabei von einem Sensor gebildet sein, der die Kühlwassertemperatur der Brennkraftmaschine mißt. Die Erhöhung der Leerlaufdrehzahl kann durch Anstellen der Drosselklappe aus der Leerlaufstellung oder durch eine die Drosselklappe umgehende Bypassleitung erfolgen, in der ein Ventil angeordnet ist, das geöffnet wird, wenn die Kühlwassertemperatur unter dem vorbestimmten Wert liegt und die Drosselklappe geschlossen ist. Bei diesem bekannten System wird also im Leerlauf die Menge des angesaugten Kraftstoff-Luftgemisches erhöht und gleichzeitig der Zündzeitpunkt zurückgenommen, wodurch einerseits ein übermäßiges Ansteigen der Drehzahl vermieden und andererseits die Abgastemperatur erhöht wird. Nachteilig ist jedoch, daß dieses System nur im Leerlauf, also bei geschlossener Drosselklappe wirksam ist und sofort außer Betrieb gesetzt wird, wenn der Fahrer wegfährt und zu diesem Zweck mit dem Gaspedal die Drosselklappe aus ihrer Schließstellung bringt. Wenn der Fahrer nicht mit hoher Last losfährt, was im allgemeinen nicht der Fall ist, so verstreicht auch bei diesem bekannten System geraume Zeit, bis der Katalysator seine Anspringtemperatur erreicht hat.

Aus der DE 41 41 946 Al ist es bekannt, ein Aufheizen des Katalysators mittels einer Sekundärluftpumpe dann zu beenden, wenn eine vorgegebene Kraftstoffmenge eingespritzt wurde.

Aus der US-PS 3,927,523 ist es bekannt, bei einer Brennkraftmaschine im Leerlauf die Drosselklappe weiter anzustellen und den Zündzeitpunkt in Richtung "spät" zu verstellen. Zusätzlich zu dieser Maßnahme schlägt diese Druckschrift eine Abgasrückführung vor, um ein nochmals schnelleres Erwärmen des Auspuffsystems zu bewirken.

Aufgabe der Erfindung ist es, ein Verfahren zum Betrieb einer Fahrzeug-Brennkraftmaschine der gattungsgemäßen Art zu schaffen, bei dem ohne großen zusätzlichen Aufwand sichergestellt ist, daß der Katalysator sehr schnell seine Anspringtemperatur erreicht.

Die Lösung dieser Aufgabe ist im Patentanspruch 1 angegeben. Vorteilhafte Ausführungsformen sind in den Unteransprüchen angegeben.

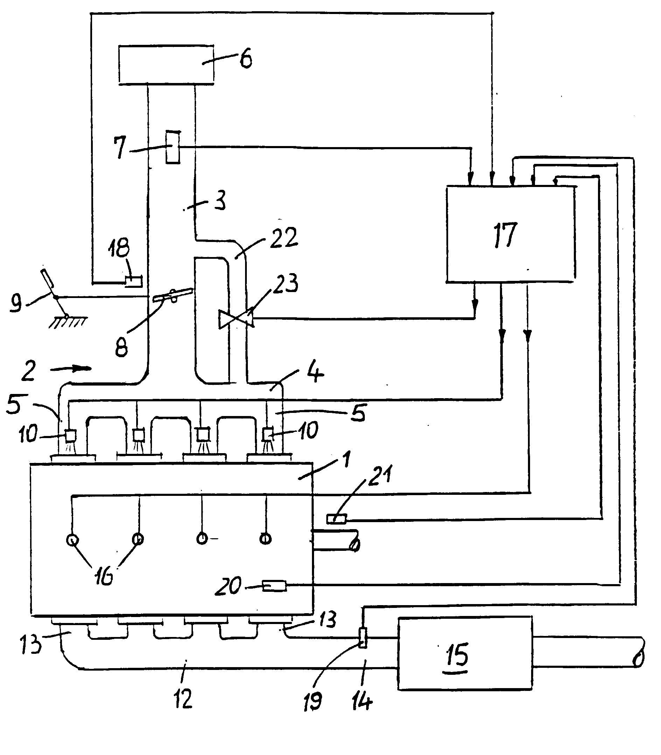

Ein Ausführungsbeispiel einer Anlage zur Durchführung des erfindungsgemäßen Verfahrens ist in der Zeichnung schematisch dargestellt.

Mit 1 ist eine fremdgezündete, wassergekühlte Vierzylinder-Brennkraftmaschine für den Antrieb eines Kraftfahrzeuges bezeichnet, die ein Einlaßsystem 2 mit einem Saugrohr 3 und einem Einlaßverteiler 4 aufweist, von dem Einzelsaugrohre 5 zu den einzelnen Zylindern ausgehen. Das Saugrohr 3 ist an einen Luftfilter 6 angeschlossen. In dem Saugrohr 3 ist ein die Luftmasse messendes oder berechnendes System 7 und stromabwärts desselben eine Drosselklappe 8 angeordnet, die willkürlich durch ein Gaspedal 9 betätigbar ist. In den Einzelsaugrohren 5 ist jeweils ein Kraftstoff-Einspritzventil 10 vorgesehen. Das Auslaßsystem 11 der Brennkraftmaschine 1 weist einen Auspuffkrümmer 12 auf, der mit den einzelnen Zylindern durch Auspuffkanäle 13 verbunden ist und an den sich eine Abgasleitung 14 anschließt, in der ein Katalysator 15 angeordnet ist. Jedem Zylinder der Brennkraftmaschine ist eine Zündkerze 16 zugeordnet. Mit 17 ist ein elektronisches Steuergerät bezeichnet, das die Einspritzventile 10 und den Zündzeitpunkt in Abhängigkeit von Eingangssignalen steuert, die es von dem System 7, einem Drosselklappensensor 18, einer Lambdasonde 19 in der Abgasleitung 14 stromauf des Katalysators 15, einem die Temperatur des Kühlwassers erfassenden Sensor 20 und einem Drehzahlsensor 21 erhält.

Um eine schnelle Erwärmung des Katalysators 15 auf seine Anspringtemperatur nach dem Starten der Brennkraftmaschine 1 zu erreichen, ist im Ausführungsbeispiel eine die Drosselklappe 8 umgehende Bypass-Leitung 22 vorgesehen, in der ein Ventil 23 angeordnet ist, das ebenfalls von dem elektronischen Steuergerät 15 gesteuert wird. Beim Starten der Brennkraftmaschine wird das Ventil 23 geöffnet, wodurch ein zusätzlicher Luftvolumenstrom angesaugt wird, der von dem System 7 erfasst wird, das ein entsprechendes Signal an das Steuergerät 17 gibt, wodurch die Einspritzventile 10 zum Einspritzen einer entsprechenden Kraftstoffmenge betätigt werden. Der dadurch entstehende, ungewollte Leistungsüberschuß wird dadurch kompensiert, daß von dem Steuergerät 17 der Zündzeitpunkt in Richtung "spät" verstellt wird. Dadurch wird der Wirkungsgrad der Verbrennung analog zu dem ungewollten Leistungsüberschuß verschlechtert und gleichzeitig die Abgastemperatur erhöht, was zusammen zu einem schnellen Anspringen des Katalysators 15 führt. Bei der Ansteuerung des Ventils 23 wird durch geeignete Zündwinkelverstellung, beispielsweise durch ein in dem Steuergerät 17 abgelegtes Zündwinkeloffsetkennfeld, über Drosselklappenwinkel und Drehzahl mit und ohne Zusatzluft auf ein gleichbleibendes Moment sowohl im Leerlauf als auch im Fahrbetrieb geregelt. Mit dem Starten der Brennkraftmaschine 1 wird gleichzeitig ein in das Steuergerät 17 integrierter Zähler gestartet, der die Einspritzmenge aufsummiert und nach Erreichen einer vorgegebenen Einspritzmenge ein schnelles oder auch allmähliches Schließen des Ventils 23 bewirkt. In gleichen Maße wird die Spätverstellung des Zündzeitpunktes zurückgenommen.

Wenn die Drosselklappe 8 von dem Gaspedal 9 zum Wegfahren allmählich geöffnet wird, vergrößert sich der von dem System 7 gemessene Volumenstrom und damit die eingespritzte Kraftstoffmenge, was zu einer noch schnelleren Aufheizung des Katalysators 15 führt, so daß die Spätverstellung des Zündzeitpunktes bald zurückgenommen und der dadurch bewirkte erhöhte Kraftstoffverbrauch verringert wird. Ohne die Bypassleitung 22 würde der zum schnellen Aufheizen des Kataysators nötige Luftvolumenstrom erst bei einem schnellen und weitgehenden Öffnen der Drosselklappe 8 vorliegen, während beim normalen Anfahren mit nur leicht geöffneter Drosselklappe auch bei Verstellen des Zündzeitpunktes in Richtung "spät" eine geraume Zeit verstreichen würde, bis der Katalysator 15 seine Anspringtemperatur erreicht hat.

Abweichend von dem dargestellten Ausführungsbeispiel kann die für den Mindest-Luftvolumenstrom benötigte Zusatzluftmenge nach dem Starten der Brennkraftmaschine 1 auch dadurch erreicht werden, daß die Drosselklappe 8 durch nicht gezeigte Mittel unabhängig von der Stellung des Gaspedals 9 geöffnet wird. Dies ist relativ einfach insbesondere bei einem sogenannten elektrischen Gaspedal zu verwirklichen, bei dem die Stellung des Gaspedals 9 elektronisch auf die Drosselklappe 8 übertragen wird. Diese Elektronik wird dann durch das Steuergerät 17 derart beeinflußt, daß die Drosselklappe 8 entsprechend angestellt wird.

Um zu vermeiden, daß durch einen Fehler oder Defekt in der Elektronik, insbesondere in dem Steuergerät 17, die Spätverstellung des Zündzeitpunktes nach Erreichen der vorgegebenen Kraftstoff-Einspritzmenge nicht zurückgenommen wird, können redundante Systeme vorgesehen werden, beispielsweise, indem die Zurücknahme der Spätverstellung erfolgt, wenn der Temperaturfühler 20 eine bestimmte Kühlwassertemperatur ermittelt, die erst nach einer gewissen Betriebsdauer erreicht wird. Läuft die Brennkraftmaschine über einen bestimmten Zeitraum mit höherer Last, so ist ebenfalls anzunehmen, daß der Katalysator seine Anspringtemperatur erreicht hat. Die Dauer eines solchen Betriebes kann durch entsprechende Software im Steuergerät 17 festgestellt werden. Schließlich ist auch nach einer Beschleunigung des Fahrzeuges auf einen vorgegebenen Wert anzunehmen, daß der Katalysator angesprungen ist. Auch dies läßt sich durch entsprechende Software in dem Steuergerät 17 feststellen.

## Patentansprüche

1. Verfahren zum Betrieb einer fremdgezündeten Fahrzeug-Brennkraftmaschine mit
- einem Einlaßsystem, das ein die Luftmasse messendes oder berechnendes System, eine willkürlich durch ein Gaspedal betätigbare Drosselklappe und eine elektronische, u. a. in Abhängigkeit von dem Luftvolumenstrom geregelte Kraftstoff-Einspritzanlage aufweist,
- einer Einrichtung zur Verstellung des Zündzeitpunktes, und
- einem Auslaßsystem mit einem Katalysator, wobei beim Starten der Brennkraftmaschine durch Einstellen eines zusätzlichen Luftvolumenstromes im Einlaßsystem ein zum schnellen Aufheizen des Katalysators erforderlicher Mindest-Luftvolumenstrom vorgesehen und der Zündzeitpunkt in Richtung spät verstellt wird und nach Erreichen eines bestimmten Betriebszustandes die Spätverstellung des Zündzeitpunktes zurückgenommen und die Einstellung des Mindest-Luftvolumenstromes aufgehoben wird,
dadurch gekennzeichnet, daß
die Einstellung des Mindest-Luftvolumenstromes unabhängig von der Gaspedalstellung auch außerhalb des Leerlaufes erfolgt und der Zündzeitpunkt derart in Richtung spät verstellt wird, daß der durch den zusätzlichen Luftvolumenstrom erzeugte ungewollte Leistungsüberschuß kompensiert wird,
und daß die Spätverstellung des Zündzeitpunktes zurückgenommen und die Einstellung des Mindest-Luftvolumenstromes aufgehoben wird, wenn seit dem Start eine vorgegebene Kraftstoffmenge eingespritzt wurde.

2. Verfahren nach Anspruch 1, dadurch gekennzeichnet, daß der zusätzliche Luftvolumenstrom durch ein Ventil in einer die Drosselklappe umgehenden Bypass-Leitung eingestellt wird und dieses Ventil geschlossen wird, wenn die vorgegebene Kraftstoff-Einspritzmenge erreicht ist.

3. Verfahren nach Anspruch 1, dadurch gekennzeichnet, daß der zusätzliche Luftvolumenstrom durch unabhängig von der Stellung des Gaspedals erfolgendes Anstellen der Drosselklappe eingestellt wird, und diese Anstellung nach Erreichen der vorgegebenen Kraftstoff-Einspritzmenge zurückgenommen wird.

4. Verfahren nach einem der Ansprüche 1 und 3, dadurch gekennzeichnet, daß die Rücknahme der Spätverstellung, das Schließen des Ventils bzw. die Rücknahme der Anstellung der Drosselklappe allmählich erfolgt, nachdem die vorgegebene Kraftstoff-Einspritzmenge erreicht ist.

5. Verfahren nach einem der Ansprüche 1 und 4, dadurch gekennzeichnet, daß die Spätverstellung des Zündzeitpunktes auf jeden Fall nach Erreichen einer vorgegebenen Kühlwassertemperatur, nach Ablauf einer vorgegebenen Zeitdauer eines Betriebes mit höherer Last oder nach Beschleunigung des Fahrzeuges auf einen vorbestimmten Wert zurückgenommen wird.

## Claims

1. Method for operating a vehicular internal combustion engine comprising
- an inlet system having a system for measuring or calculating the air mass, a throttle adapted to be operated by an accelerator pedal at will, and an electronic fuel injection system, inter alia controlled in response to the air volume flow,
- means for adjusting the ignition timing and
- an exhaust system having a catalytic converter, wherein at starting the internal combustion engine there is provided a minimum air volume flow required for quick heating of the catalytic converter by adjusting an additional air volume flow in said inlet system and the ignition timing is adjusted so as to be retarded and after reaching a predetermined operational condition the retarding of the ignition timing is withdrawn and the adjustment of the minimum air volume flow is terminated,
characterized in that
the adjustment of the minimum air volume flow is effected independently of the position of the acceleration pedal even if the internal combustion engine is not idling and the ignition timing is adjusted so as to be delayed such that the unintended excess performance produced by the additional air volume flow is compensated,
and that the retarding of the ignition timing is withdrawn and the adjustment of the minimum air volume flow is terminated when a predetermined amount of fuel has been injected after the start.

2. Method as claimed in claim 1, characterized in that the additional air volume flow is adjusted via a valve in a bypass passage bypassing the throttle and that this valve is closed when the predetermined amount of injected fuel is reached.

3. Method as claimed in claim 2, characterized in that the additional air volume flow is adjusted by positioning the throttle independently of the position of the acceleration pedal and that such positioning is withdrawn when the predetermined amount of injected fuel is reached.

4. Method in one of claims 1 and 3, characterized in that the withdrawal of the retarding, the closing of the valves or the withdrawal of the positioning of the throttle, respectively, is effected gradually, when the predetermined amount of injected fuel is reached.

5. Method as claimed in one of claims 1 and 4, characterized in that the retarding of the ignition timing is in any case withdrawn after reaching a predetermined cooling water temperature, after expiration of a predetermined period of operation with higher load or after acceleration of the vehicle on a predetermined value.

## Revendications

1. Procédé pour actionner un moteur à combustion interne d'un véhicule à allumage commandé avec
- un système d'admission comprenant un système mesurant ou calculant la masse d'air, une soupape d'étranglement activable arbitrairement par une pédale d'accélérateur et un dispositif électronique d'injection de carburant réglé entre autres en fonction du débit de volume d'air,
- un dispositif pour ajuster le point d'allumage, et
- un système de sortie avec un catalyseur, où l'on prévoit un débit de volume d'air minimal nécessaire au chauffage rapide du catalyseur au démarrage du moteur à combustion interne par réglage d'un débit de volume d'air supplémentaire dans le système d'admission, où le point d'allumage est retardé par ajustement et où après avoir atteint un état de fonctionnement prédéterminé, l'ajustement retardé est réduit et le réglage du débit de volume d'air minimal est annulé,
caractérisé en ce que
le réglage du débit de volume d'air minimal a lieu indépendamment de la position de la pédale d'accélérateur même en dehors de la marche à vide et en ce que le retard du point d'allumage est ajusté de sorte que l'excès de puissance involontaire produit par le débit de volume d'air supplémentaire soit compensé,
et en ce que l'ajustement retardé du point d'allumage est réduit et le réglage du débit de volume d'air minimal est annulé quand, depuis le démarrage, une quantité prédéterminée de carburant a été injectée.

2. Procédé selon la revendication 1, caractérisé en ce que le débit de volume d'air supplémentaire est ajusté par un clapet dans un conduit de by-pass de la soupape d'étranglement et en ce que ce clapet est fermé quand la quantité prédéterminée de carburant injecté est atteinte.

3. Procédé selon la revendication 1, caractérisé en ce que le débit de volume d'air supplémentaire est ajusté par le réglage de la soupape d'étranglement qui se fait indépendamment de la position de la pédale d'accélérateur et que ce réglage est réduit après que la quantité prédéterminée de carburant injecté soit atteinte.

4. Procédé selon les revendications 1 et 3, caractérisé en ce que la réduction de l'ajustement retardé, la fermeture du clapet, respectivement la réduction du réglage de la soupape d'étranglement se font graduellement après que la quantité prédéterminée de carburant injecté soit atteinte.

5. Procédé selon l'une des revendications 1 et 4, caractérisé en ce que l'ajustement retardé du point d'allumage est réduit dans tous les cas jusqu'à atteindre une valeur prédéterminée après qu'une température prédéterminée du liquide de refroidissement soit atteinte, qu'une durée prédéterminée de fonctionnement sous charge plus élevée se soit écoulée ou après l'accélération du véhicule.
